# EUROPEAN PATENT SPECIFICATION

(11) **EP 3 099 901 B1**
(45) Date of publication and mention of the grant of the patent: **09.10.2019**
(21) Application number: 14881024.5
(22) Date of filing: 26.12.2014
(51) Int. Cl.: F01D 5/18, F02C 7/18

(54) **TURBINE BLADE WITH AIRFOIL HAVING A TRAILING EDGE COOLING PEDESTAL CONFIGURATION**
TURBINENLAUFSCHAULEL MIT SCHAUFELBLATT MIT AUSTRITTSKANTENKÜHLSOCKELKONFIGURATION
AUBE ROTORIQUE DE TURBINE AVEC PROFIL AÉRODYNAMIQUE AVEC CONFIGURATION DE SOCLES DE REFROIDISSEMENT DE BORD DE FUITE

(30) Priority: 30.01.2014 US 201461933351 P
(43) Date of publication of application: 07.12.2016
(73) Proprietor: United Technologies Corporation, Farmington, CT 06032 (US)
(72) Inventor: DOWNEY, James B. Jr., Manchester, CT 06042 (US); ZHANG, Brenda, Farmington, CT 06032 (US); LEMIEUX, Steven G., South Windsor, CT 06074 (US); KAUFMAN, Eleanor D., Rocky Hill, CT 06067 (US); FUKUDA, Takao, East Hartford, CT 06118 (US); NADEAU, Daniel C., Wethersfield, CT 06109 (US)
(74) Representative: Dehns
(86) International application number: PCT/US2014/072431
(87) International publication number: WO 2015/116338

(56) References cited:
- EP-A2- 1 849 960
- EP-A2- 2 236 752
- CN-A- 102 953 767
- US-A- 4 278 400
- US-A- 4 752 186
- US-A1- 2010 221 121
- US-A1- 2013 034 429
- US-A1- 2013 232 991
- US-A1- 2013 251 538
- US-A1- 2013 251 538
- US-B1- 6 514 046

## Description

### BACKGROUND

This disclosure relates to a gas turbine engine airfoil. In particular, the disclosure relates to a trailing edge cooling configuration having a particular arrangement of pedestals.

Coolant air exiting a turbine blade creates a mixing loss, which degrades the performance of a gas turbine engine. The mainstream air receives a loss as it brings the coolant air up to its velocity direction and speed. It is desired to minimize this mixing loss to improve the performance of the engine and lower the specific fuel consumption of the engine. From a turbine blade durability perspective it is desired to have all of the turbine blades in the rotor of one stage to have the same amount of cooling flow. This is because the cooling flow levels are one of the strongest drivers on blade metal temperature and the blade metal temperatures set the life of the part. The life of the turbine is determined by the failure of just one blade as opposed to many blades. The extra flow those blades are using comes at a performance penalty as it creates additional mixing losses. That extra coolant flow also bypasses the combustor and is not combusted, which is an additional loss to the system.

One type of turbine blade includes an exit centered about the apex of the trailing edge. One example center discharge has a vertical array of windows, which looks to alternate between open space. This configuration may also be referred to as a "drilled" trailing edge. Finally, to further increase performance, these trailing edge windows may meter the internal cooling air flow rate to keep internal pressure high.

The windows, or open spaces, of the center discharged trailing edge are more likely to become smaller during the application of thermal barrier coatings (TBC). This is commonly referred to as "coatdown" and occurs when TBC deposits on any surfaces within the coating applicators line of sight. On a center discharged part, the internal surfaces adjacent to the windows are directly visible to the coating applicator during the coating process. Accumulated coating thickness in the trailing edge exit openings results in smaller windows that impede the part's internal mass flow rate, which may decrease the blade's ability to survive in the turbine environment. In many cases the need to maintain part durability outweighs the performance benefit of using a center discharge configuration, so the blade is instead designed with a less desirable pressure side discharge exit.

EP 1 849 960 A2 discloses a prior art turbine blade in accordance with the preamble of claim 1.

US 4 278 400 A discloses a prior art coolable rotor blade.

US 2013/251538 A1 discloses a prior art method for trailing edge cooling.

US 2013/232991 A1 discloses a prior art airfoil with improved internal cooling channel pedestals.

US 2010/221121 A1 discloses a prior art turbine airfoil cooling system with near wall pin fin cooling chambers.

EP 2 236 752 A2 discloses a prior art cooled airfoil for a gas turbine engine.

### SUMMARY

According to the present invention, there is provided a turbine blade as set forth in claim 1.

In an embodiment, pedestals in at least one of the groups are round. Pedestals in at least another of the groups are oblong.

In a further embodiment of any of the above, the oblong pedestals have a radius at opposing ends of about 0,020 inch (0.51 mm) and are about 0.050-0.060 inch (1.27-1.52 mm) long.

In a further embodiment of any of the above, the round pedestals have a radius of about 0.020-0.030 inch (0.51-0.76 mm).

In a further embodiment of any of the above, the pedestals are spaced apart from one another within a row by about 0.042-0.063 inch (1.07-1.60 mm) between centerlines of adjacent pedestals.

In a further embodiment of any of the above, a trailing edge exit has an uncoated width in a thickness direction, which is perpendicular to the chord-wise direction, of about 0.020 inch (0.51 mm).

In a further embodiment of any of the above, the first and second rows are separated by about 0.100-0.140 inch (2.54-3.56 mm) between centerlines of adjacent pedestals in the chord-wise direction.

In a further embodiment of any of the above, the second and third rows are separated by about 0.110-0.150 inch (2.79-3.81 mm) between centerlines of adjacent pedestals in the chord-wise direction.

In a further embodiment of any of the above, the third row and the trailing edge are separated by about 0.495-0.535 inch (12.57-13.59 mm) between a centerline of the third row pedestals and the trailing edge in the chord-wise direction.

In a further embodiment of any of the above, the pressure and suction surfaces support a thermal barrier coating.

In a further embodiment of any of the above, a thermal barrier coating is in the trailing edge exit without reaching the first row of pedestals.

In a further embodiment of any of the above, the cooling passage at the trailing edge has a generally uniform width.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 is a perspective view of an example turbine blade.
Figure 3 is a cross-sectional view through the airfoil shown in Figure 2 taken along line 3-3.
Figure 4 is a cross-sectional view through a core used to produce a trailing edge cooling passage of the airfoil shown in Figure 3 taken along 4-4.
Figure 5A-5C illustrates an enlarged view of first, second and third groups of holes in a first row of pedestals, shown in Figure 4.
Figure 6A-6C illustrates an enlarged view of first, second and third groups of holes in a second row of pedestals, shown in Figure 4.
Figure 7A-7C illustrates an enlarged view of first, second and third groups of holes in a third row of pedestals, shown in Figure 4.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

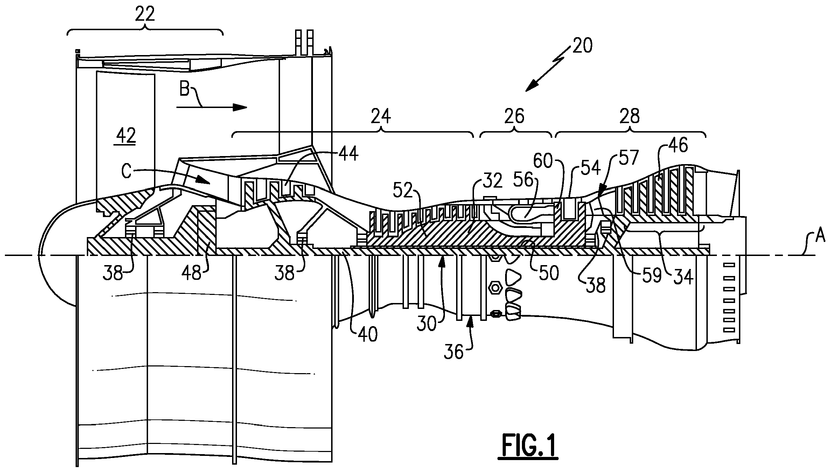

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 57 of the engine static structure 36 is arranged generally between the high pressure turbine 54 and the low pressure turbine 46. The mid-turbine frame 57 further supports bearing systems 38 in the turbine section 28 as well as setting airflow entering the low pressure turbine 46.

The core airflow C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 57 includes vanes 59, which are in the core airflow path and function as an inlet guide vane for the low pressure turbine 46. Utilizing the vane 59 of the mid-turbine frame 57 as the inlet guide vane for low pressure turbine 46 decreases the length of the low pressure turbine 46 without increasing the axial length of the mid-turbine frame 57. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft. (10,668 m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R) / 518.7)^{0.5}] (where °R = K x 9/5). The "Low corrected fan tip speed", as disclosed herein according to one non-limiting embodiment, is less than about 1150 ft/second (350.5 m/s).

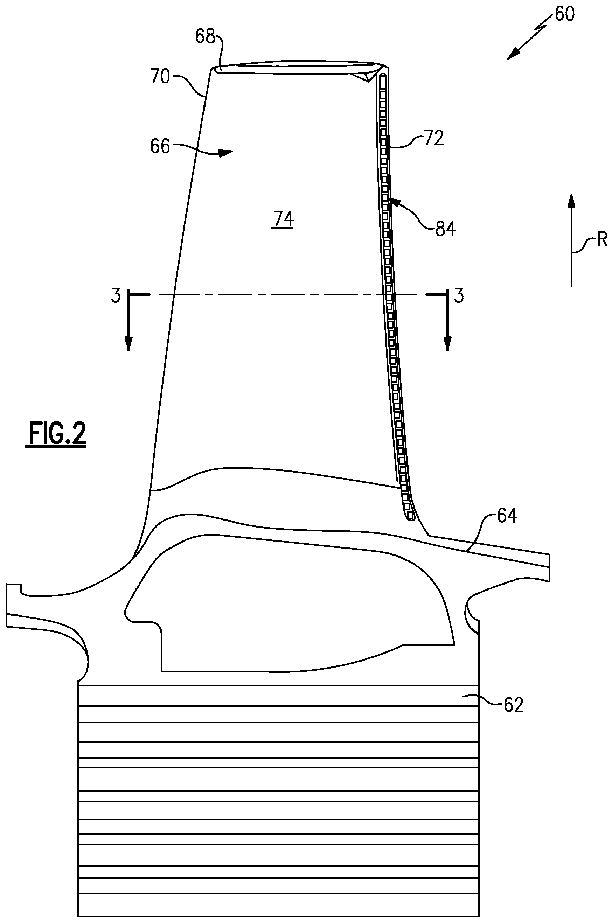

Referring to Figure 2, an example turbine blade 60 is illustrated, which may be suitable for the high pressure turbine 54, for example. In one example, the turbine blade 60 is used in a first stage high pressure turbine 54, although the disclosed trailing edge cooling configuration may be used for any blade or stator vane within a gas turbine engine.

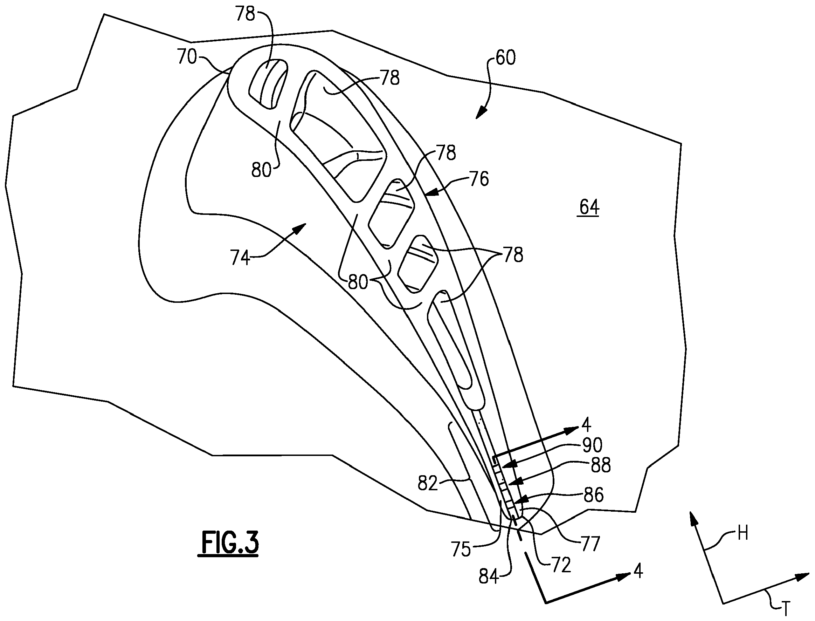

The turbine blade 60 includes an airfoil 66 extending in a radial direction R from a platform 64, which is supported by a root 62, to a tip 68. The airfoil 66 includes pressure and suction surfaces 74, 76 extending in the radial direction R and joined at a leading edge 70 and a trailing edge 72. Referring to Figure 3, the pressure and suction surfaces 74, 76 are respectively provided by pressure and suction walls 75, 77. Walls 80 are interconnected between the pressure and suction walls 75, 77 in an airfoil thickness direction T that is generally perpendicular to a chord-wise direction H that extends between the leading and trailing edges 70, 72.

Cooling passages 78 extend in a radial direction between the walls 75, 77, 80 of the airfoil 66. A trailing edge cooling passage 82 is fluidly connected to one of the cooling passages 78 and arranged between the pressure and suction walls 75, 77. The trailing edge cooling passage 82 extends to the trailing edge 72. In the example configuration, the trailing edge cooling passage 82 terminates in an elongated discrete trailing edge exit 84 at the trailing edge 72 that extends much of the radial length of the airfoil, which is best shown in Figure 2.

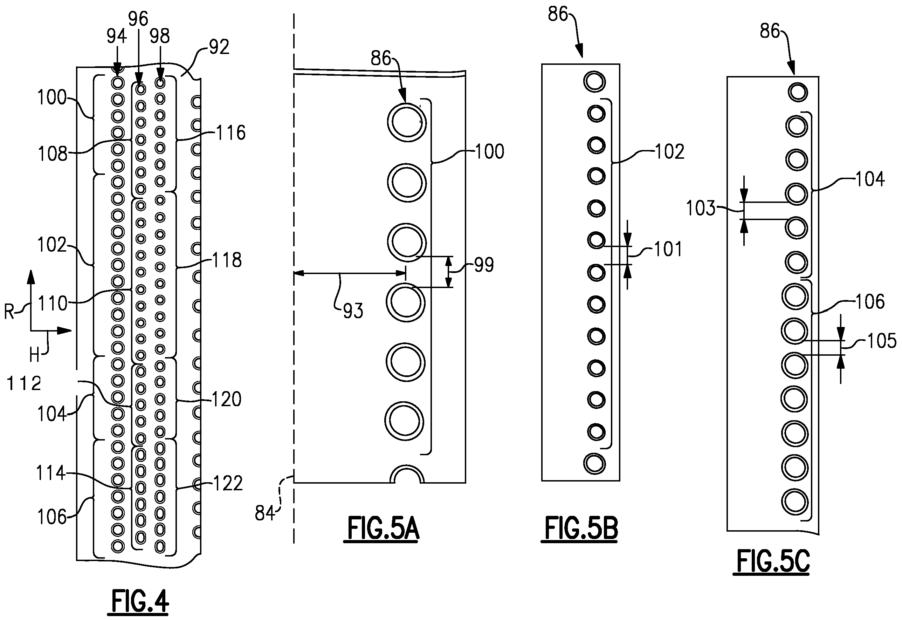

Referring to Figure 4, a core 92 is used to form first, second and third rows of pedestals 86, 88, 90 (Figure 3) with its corresponding first, second and third rows of holes 94, 96, 98. The pressure and suction walls 75, 77 are joined to one another by the multiple spaced apart pedestals, which are generally cylindrical shaped columns of material. In one example, the trailing edge cooling passage 82 and pedestals are formed by a stamped refractory metal core, or another suitable material, such as ceramic. The first, second and third rows of pedestals 86, 88, 90 are spaced apart from one another in the chord-wise direction H and extend in the radial direction R.

The first row of pedestals 86, which is arranged closest to the trailing edge 72, is arranged interiorly from the trailing edge 72 thereby leaving the trailing edge exit 84 unobstructed. A thermal barrier coating (TBC) is provided on the pressure and suction surfaces 74, 76. Since the trailing edge exit 84 is relatively open, any thermal barrier coating that reaches into the trailing edge cooling passage 82 will not tend to clog the trailing edge exit 84. Generally, the thermal barrier coating may penetrate the trailing edge exit, but without reaching the first row of pedestals 86. In on example, the trailing edge 84 exit has an uncoated, generally uniform width in a thickness direction T of about 0.020 inch (0.51 mm).

As can be appreciated, the core holes shown in Figures 4, correspond to the pedestals shown in Figures 5A-7C. At least one the first, second and third rows of pedestals (in the example, all three rows) include different groups of pedestals radially spaced from one another. At least one the first, second and third rows of pedestals 86, 88, 90 include first, second, third and fourth groups of pedestal. At least one group has pedestals that are different sizes, that is, different cross-sectional areas and/or shapes, than the pedestals of another group. The radially outer groups of pedestals, arranged nearest an airfoil tip and an airfoil platform, are larger than groups of pedestals radially between the radially outer groups of pedestals. This provides improved structural integrity, since the trailing edge exit 84 is largely open and unobstructed along the radial length of the airfoil.

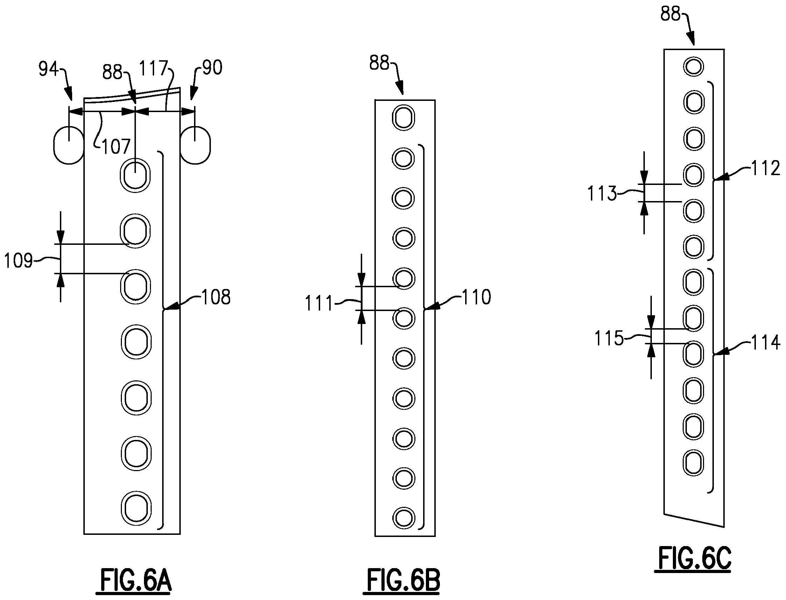

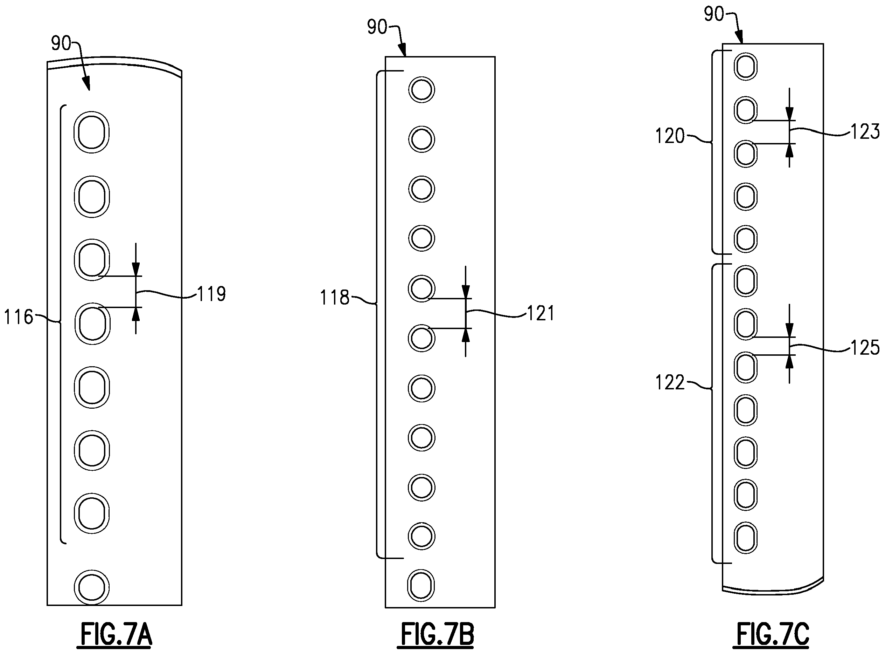

As shown in Figures 5A-7C, one of the rows of pedestals includes four groups of pedestals (100, 102, 104, 106 in Figures 5A-5C; 108, 110, 112, 114 in Figures 6A-6C; 116, 118, 120, 122 in Figures 7A-7C). The first group (100, 108, 116) is arranged near the tip 68, and the fourth group (106, 114, 122) is arranged near the platform 64.

Pedestals in the first and third groups (100, 108, 116; and 104, 112, 120) are the same size. Pedestals in the fourth group (106, 114, 122) are larger than the pedestals in the first and third groups (100, 108, 116; and 104, 112, 120). Pedestals in the second group (102, 110, 118) are smaller than the pedestals in the first and third groups (100, 108, 116; and 104, 112, 120).

Pedestals in at least one of the groups are round, for example, in the four groups (100, 102, 104, 106) in the first row of pedestals 86, the second groups (110, 118) in the second and third rows of pedestals 88, 90. In the example, the round pedestals have a radius of about 0.020-0.030 inch (0.51-0.76 mm). The pedestals in the other groups are oblong. In one example, the oblong pedestals have a radius at opposing ends of about 0.020 inch (0.51 mm) and are about 0.050-0.060 inch (1.27-1.52 mm) long. It should be understood that the pedestal shapes and groupings can be different than illustrated. Since there is a greater spacing between the pedestals near the middle of the trailing edge cooling passage, airflow will be directed toward the middle of the airfoil. In other words, a non-uniform mass flow rate in the radial direction is achieved. This approach can be used to direct bulk internal flow past a local "hot spot" on the external airfoil.

The pedestals are spaced apart from one another within a row by about 0.042-0.063 inch (1.07-1.60 mm) between centerlines of adjacent pedestals in the radial direction R. These radial spacings are represented by the distances 99, 101, 103, 109, 111, 115, 119, 121, 125 in Figures 5A-7C.

The first and second rows of pedestals 86, 88 are separated by about 0.100-0.140 inch (2.54-3.56 mm) between centerlines of adjacent pedestals in the chord-wise direction, as indicated by distance 107 in Figure 6A. The second and third rows of pedestals 88, 90 are separated by about 0.110-0.150 inch (2.79-3.81 mm) between centerlines of adjacent pedestals in the chord-wise direction, as indicated by distance 117 in Figure 6A. The third row 90 and the trailing edge 84 are separated by about 0.495-0.535 inch (12.57-13.59 mm) between a centerline of the third row pedestals and the trailing edge 84 in the chord-wise direction, such that distance 93 (Figure 5A) is about 0.245-0.285 inch (6.22-7.24 mm) Distance 93 is the chord-wise distance between the trailing edge 84 and the centerline of the first row pedestals.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A turbine blade (60) for a gas turbine engine, comprising an airfoil (66) exending from a platform (64), the airfoil (66) comprising:
pressure and suction surfaces (74, 76) provided by pressure and suction walls (75, 77) extending in a radial direction and joined at a leading edge (70) and a trailing edge (72);
a cooling passage (82) arranged between the pressure and suction walls (75, 77) and extending to the trailing edge (72), the cooling passage (82) terminating in a trailing edge exit (84) arranged in the trailing edge (72); and
multiple rows of pedestals (86, 88, 90) include a first row of pedestals (86) joining the pressure and suction walls (75, 77), the first row of pedestals (86) arranged closest to the trailing edge (72) but interiorly from the trailing edge (72) thereby leaving the trailing edge exit (84) unobstructed, wherein the first row of pedestals (86), second and third rows of pedestals (88, 90) each extend in a radial direction and are spaced from one another in a chord-wise direction, and at feast one of the first, second and third rows of pedestals (86, 88, 90) include first, second, third and fourth groups of pedestals (100, 102, 104, 106), at least one group (102, 106) having pedestals that are different sizes than the pedestals of another group, the first group (100) arranged near an airfoil tip, and the fourth group (106) arranged near the platform (64),
**characterised in that**:
pedestals in the first and third group (100, 104) are the same size, pedestals in the fourth group (106) are larger than the pedestals in the first and third groups, and pedestals in the second group (102) are smaller than the pedestals in the first and third groups.

2. The turbine blade according to claim 1, wherein pedestals (86, 88, 90) in at least one of the groups are round, and pedestals in at least another of the groups are oblong.

3. The turbine blade according to claim 2, wherein the oblong pedestals have a radius at opposing ends of about 0.51 mm (0.020 inch) and are 1.27-1.52 mm (0.050-0.060 inch) long.

4. The turbine blade according to claim 2 or 3, wherein the round pedestals have a radius of about 0.51-0.76 mm (0.020-0.030 inch).

5. The turbine blade according to any preceding claim, wherein a trailing edge exit (84) has an uncoated width in a thickness direction, which is perpendicular to the chord-wise direction, of about 0.51 mm (0.020 inch).

6. The turbine blade according to any preceding claim, wherein the first and second rows (86, 88) are separated by 2.54-3.56 mm (0.100-0.140 inch) between centerlines of adjacent pedestals in the chord-wise direction.

7. The turbine blade according to any preceding claim, wherein the second and third rows (88, 90) are separated by 2.79-3.81 mm (0.110-0.150 inch) between centerlines of adjacent pedestals in the chord-wise direction.

8. The turbine blade according to any preceding claim, wherein the third row (90) and the trailing edge (72) are separated by 12.57-13.59 mm (0.495-0.535 inch) between a centerline of the third row pedestals and the trailing edge in the chord-wise direction.

9. The turbine blade according to any preceding claim, wherein the pedestals are spaced apart from one another within a row by 1.07-1.60 mm (0.042-0.063 inch) between centerlines of adjacent pedestals.

10. The turbine blade according to any preceding claim, wherein the pressure and suction surfaces (74, 76) support a thermal barrier coating.

11. The turbine blade according to claim 10, further comprising a thermal barrier coating in the trailing edge exit (84) without reaching the first row (86) of pedestals.

12. The turbine blade according to any preceding claim, wherein the cooling passage at the trailing edge (72) has a generally uniform width.

## Patentansprüche

1. Turbinenlaufschaufel (60) für einen Gasturbinenmotor, umfassend ein Schaufelblatt (66), das sich von einer Plattform (64) erstreckt, wobei das Schaufelblatt (66) Folgendes umfasst:
eine Druck- und eine Saugfläche (74, 76), die durch eine Druck- und eine Saugwand (75, 77) bereitgestellt sind, die sich in einer radialen Richtung erstrecken und an einer Eintrittskante (70) und einer Austrittskante (72) verbunden sind;
einen Kühldurchlass (82), der zwischen der Druck- und der Saugwand (75, 77) angeordnet ist und sich zu der Austrittskante (72) erstreckt, wobei der Kühldurchlass (82) in einem Austrittskantenauslass (84) endet, der in der Austrittskante (72) angeordnet ist; und
mehrere Reihen an Sockeln (86, 88, 90), beinhaltend eine erste Reihe an Sockeln (86), die mit der Druck- und der Saugwand (75, 77) verbunden ist, wobei die erste Reihe an Sockeln (86) der Austrittskante (72) am nächsten angeordnet ist, aber einwärts der Austrittskante (72), wodurch der Austrittskantenauslass (84) unbehindert bleibt, wobei sich die erste Reihe an Sockeln (86), die zweite und die dritte Reihe an Sockeln (88, 90) jeweils in einer radialen Richtung erstrecken und in einer Sehnenrichtung voneinander beabstandet sind, und zumindest eine von der ersten, zweiten und dritten Reihe an Sockeln (86, 88, 90) eine erste, zweite, dritte und vierte Gruppe an Sockeln (100, 102, 104, 106) beinhaltet, wobei zumindest eine Gruppe (102, 106) Sockeln aufweist, die andere Größen als die Sockel einer anderen Gruppe aufweisen, wobei die erste Gruppe (100) nahe einer Schaufelblattspitze angeordnet ist und die vierte Gruppe (106) nahe der Plattform (64) angeordnet ist,
**dadurch gekennzeichnet, dass**:
Sockel in der ersten und dritten Gruppe (100, 104) die gleiche Größe aufweisen, Sockel in der vierten Gruppe (106) größer als die Sockel in der ersten und dritten Gruppe sind und Sockel in der zweiten Gruppe (102) kleiner als die Sockel in der ersten und dritten Gruppe sind.

2. Turbinenlaufschaufel nach Anspruch 1, wobei die Sockel (86, 88, 90) in zumindest einer der Gruppen rund sind und Sockel in zumindest einer anderen der Gruppen länglich sind.

3. Turbinenlaufschaufel nach Anspruch 2, wobei die länglichen Sockel einen Radius an gegenüberliegenden Enden von etwa 0,51 mm (0,020 Zoll) aufweisen und 1,27-1,52 mm (0,050-0,060 Zoll) lang sind.

4. Turbinenlaufschaufel nach Anspruch 2 oder 3, wobei die runden Sockel einen Radius von etwa 0,51-0,76 mm (0,020-0,030 Zoll) aufweisen.

5. Turbinenlaufschaufel nach einem vorhergehenden Anspruch, wobei ein Austrittskantenauslass (84) eine unbedeckte Breite in einer Dickenrichtung, die senkrecht zu der Sehnenrichtung ist, von etwa 0,51 mm (0,020 Zoll) aufweist.

6. Turbinenlaufschaufel nach einem vorhergehenden Anspruch, wobei die erste und die zweite Reihe (86, 88) um 2,54-3,56 mm (0,100-0,140 Zoll) zwischen Mittellinien von benachbarten Sockeln in der Sehnenrichtung getrennt sind.

7. Turbinenlaufschaufel nach einem vorhergehenden Anspruch, wobei die zweite und die dritte Reihe (88, 90) um 2,79-3,81 mm (0,110-0,150 Zoll) zwischen Mittellinien von benachbarten Sockeln in der Sehnenrichtung getrennt sind.

8. Turbinenlaufschaufel nach einem vorhergehenden Anspruch, wobei die dritte Reihe (90) und die Austrittskante (72) um 12,57-13,59 mm (0,495-0,535 Zoll) zwischen einer Mittellinie der Sockel der dritten Reihe und der Austrittskante in der Sehnenrichtung getrennt sind.

9. Turbinenlaufschaufel nach einem vorhergehenden Anspruch, wobei die Sockel um 1,07-1,60 mm (0,042-0,063 Zoll) zwischen Mittellinien von benachbarten Sockeln innerhalb einer Reihe voneinander beabstandet sind.

10. Turbinenlaufschaufel nach einem vorhergehenden Anspruch, wobei die Druck- und die Saugfläche (74, 76) eine Wärmedämmschicht tragen.

11. Turbinenlaufschaufel nach Anspruch 10, ferner umfassend eine Wärmedämmschicht in dem Austrittskantenauslass (84), ohne die erste Reihe (86) an Sockeln zu erreichen.

12. Turbinenlaufschaufel nach einem vorhergehenden Anspruch, wobei der Kühldurchlass an der Austrittskante (72) eine im Allgemeinen einheitliche Breite aufweist.

## Revendications

1. Aube rotorique de turbine (60) pour un moteur à turbine à gaz, comprenant un profil aérodynamique (66) s'étendant depuis une plateforme (64), le profil aérodynamique (66) comprenant :
des surfaces de pression et d'aspiration (74, 76) fournies par des parois de pression et d'aspiration (75, 77) s'étendant dans une direction radiale et reliées à un bord d'attaque (70) et un bord de fuite (72) ;
un passage de refroidissement (82) disposé entre les parois de pression et d'aspiration (75, 77) et s'étendant jusqu'au bord de fuite (72), le passage de refroidissement (82) se terminant par une sortie du bord de fuite (84) disposée dans le bord de fuite (72) ; et
plusieurs rangées de socles (86, 88, 90) comportant une première rangée de socles (86) reliant les parois de pression et d'aspiration (75, 77), la première rangée de socles (86) étant disposée au plus près du bord de fuite (72), mais à l'intérieur à partir du bord de fuite (72) laissant ainsi la sortie du bord de fuite (84) sans obstruction, dans laquelle la première rangée de socles (86), les deuxième et troisième rangées de socles (88, 90) s'étendent chacune dans une direction radiale et sont espacées les unes des autres dans une direction dans le sens de la corde, et au moins l'une des première, deuxième et troisième rangées de socles (86, 88, 90) comporte des premier, deuxième, troisième et quatrième groupes de socles (100, 102, 104, 106), au moins un groupe (102, 106) ayant des socles de tailles différentes de celles des socles d'un autre groupe, le premier groupe (100) étant disposé à proximité d'une extrémité de profil aérodynamique et le quatrième groupe (106) étant disposé à proximité de la plateforme (64),
**caractérisée en ce que** :
les socles du premier et du troisième groupe (100, 104) ont la même taille, les socles du quatrième groupe (106) sont plus grands que les socles des premier et troisième groupes, et les socles du deuxième groupe (102) sont plus petits que les socles des premier et troisième groupes.

2. Aube rotorique de turbine selon la revendication 1, dans laquelle les socles (86, 88, 90) dans au moins un des groupes sont ronds, et les socles dans au moins un autre des groupes sont oblongs.

3. Aube rotorique de turbine selon la revendication 2, dans laquelle les socles oblongs ont un rayon aux extrémités opposées d'environ 0,51 mm (0,020 pouce) et une longueur de 1,27 à 1,52 mm (0,050 à 0,060 pouce).

4. Aube rotorique de turbine selon la revendication 2 ou 3, dans laquelle les socles ronds ont un rayon d'environ 0,51 à 0,76 mm (0,020 à 0,030 pouce).

5. Aube rotorique de turbine selon une quelconque revendication précédente, dans laquelle une sortie du bord de fuite (84) a une largeur non recouverte dans une direction d'épaisseur, qui est perpendiculaire à la direction dans le sens de la corde, d'environ 0,51 mm (0,020 pouce) .

6. Aube rotorique de turbine selon une quelconque revendication précédente, dans laquelle les première et deuxième rangées (86, 88) sont séparées de 2,54 à 3,56 mm (0,100 à 0,140 pouce) entre les lignes centrales de socles adjacents dans la direction dans le sens de la corde.

7. Aube rotorique de turbine selon une quelconque revendication précédente, dans laquelle les deuxième et troisième rangées (88, 90) sont séparées de 2,79 à 3,81 mm (0,110 à 0,150 pouce) entre les lignes centrales de socles adjacents dans la direction dans le sens de la corde.

8. Aube rotorique de turbine selon une quelconque revendication précédente, dans laquelle la troisième rangée (90) et le bord de fuite (72) sont séparés de 12,57 à 13,59 mm (0,495 à 0,535 pouce) entre une ligne centrale des socles de la troisième rangée et le bord de fuite dans la direction dans le sens de la corde.

9. Aube rotorique de turbine selon une quelconque revendication précédente, dans laquelle les socles sont espacés les uns des autres dans une rangée de 1,07 à 1,60 mm (0,042 à 0,063 pouce) entre les lignes centrales des socles adjacents.

10. Aube rotorique de turbine selon une quelconque revendication précédente, dans laquelle les surfaces de pression et d'aspiration (74, 76) supportent un revêtement de barrière thermique.

11. Aube rotorique de turbine selon la revendication 10, comprenant en outre un revêtement de barrière thermique dans la sortie du bord de fuite (84) sans atteindre la première rangée (86) de socles.

12. Aube rotorique de turbine selon une quelconque revendication précédente, dans laquelle le passage de refroidissement au niveau du bord de fuite (72) a une largeur généralement uniforme.
